(19) Europäisches Patentamt
European Patent Office
Office européen des brevets

(11) **EP 4 660 851 A1**

(12) **EUROPEAN PATENT APPLICATION**

(43) Date of publication:
**10.12.2025 Bulletin 2025/50**

(21) Application number: **24305897.1**

(22) Date of filing: **06.06.2024**

(51) International Patent Classification (IPC):
**G06F 18/23** (2023.01)   **G06N 3/0455** (2023.01)
**G06N 3/088** (2023.01)   **H04L 9/40** (2022.01)
**G06F 21/55** (2013.01)

(52) Cooperative Patent Classification (CPC):
**G06F 18/23; G06N 3/045; G06N 3/0455;**
**G06N 3/084; G06N 3/088; G06N 20/00;**
**H04L 63/1416; H04L 63/1425; H04L 63/145;**
**H04L 63/1458;** G06F 21/55

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Nokia Solutions and Networks Oy**
**02610 Espoo (FI)**

(72) Inventors:
• **KHATRI, Vikramajeet**
  **02610 Espoo (FI)**

• **HOJJATINIA, Sina**
  **91300 Massy (FR)**
• **EL ABED, Haithem**
  **91300 Massy (FR)**
• **PAPILLON, Serge**
  **75014 Paris (FR)**
• **MONSHIZADEH, Mehrnoosh**
  **91180 Saint Germain les Arpajon (FR)**

(74) Representative: **Novagraaf Technologies**
**Bâtiment O2**
**2, rue Sarah Bernhardt**
**CS90017**
**92665 Asnières-sur-Seine Cedex (FR)**

(54) **METHOD AND APPARATUS FOR CLUSTERING INPUT DATA USING AN AUTOENCODER FOR NETWORK INTRUSION DETECTION**

(57)   A method comprising:
- obtaining a dataset of input samples, one of said input samples comprising a number of input data features,
- applying said input samples to a machine learning system comprising a first machine learning model, or encoder, configured to output encoded samples, one of said output encoded samples comprising fewer encoded features than the number of input data features,
- applying said output encoded samples to a second machine learning model, or decoder, of said machine learning system, configured to produce reconstructed input samples from said encoded samples,
- determining a reconstruction loss based on a difference between the input samples and the reconstructed samples,
- clustering said encoded samples into a plurality of clusters,
- determining a clustering error, said clustering error being defined as taking on a lower value the more homogeneous and separated the clusters are,
- obtaining a total loss based on the reconstruction loss and clustering error, and
- while a stopping condition comprising the total loss being less than a best total loss, is not reached, tuning internal weights of said encoder and said decoder based on said total loss, and reiterating the previous steps.

FIG. 3

**Description**

TECHNICAL FIELD

Various example embodiments relate generally to a method and apparatus for processing a large amount of unknown input data and clustering them into homogeneous and separate clusters. They may be applied, but not only, to network intrusion data, such as data packets collected in a communication network during an incident, for providing an analyst with a manageable amount of data to analyze.

BACKGROUND

In the field of Machine Learning, unknown data analysis is one of the well-known challenges and many studies have been conducted on different techniques to solve this issue. In real-life scenarios for a publicly available dataset (images, network traffic, log files, etc), a considerable amount of incoming data does not belong to any known category and subsequently, leads to model performance degradation. Annotating large datasets is very costly and hence we can label only a few examples manually. In addition, for unknown input data, dividing data into classes without having information on the nature of the data is challenging.

For cyber security applications, when responding to a security incident, analysts are faced with a huge amount of data to go through. Forensics analysts rely for example on timestamps to identify pivot points to help them narrow down where to start looking. In the case of network intrusions, part of the available data is packets collected during the incident. The amount of data packets could be staggering. Typical approaches consist of filtering out the known packets, which reduces considerably the amount of data to analyse but still the remaining unknown traffic is big enough to represent a challenge for the analyst. This is often compounded by the need to do the processing in real time in certain situations.

For the above reasons, current intrusion detection systems turn out to suffer from a low detection rate due to emergence of unknown attacks.

Although clustering methods have been introduced to gain some insight into the structure of the data, they also have some drawbacks. Clusters can appear with different sizes, shapes, data sparseness, and overlapping degrees. Even if there are many clustering algorithms, it is difficult not only to select an algorithm that satisfies the best for a particular dataset but also, how to tune various parameters of the same algorithm. Furthermore, model scalability is a major problem (both in time complexity & memory complexity) which makes it difficult to perform such an analysis in real-time and for real-world amount of data.

For example, in the article by Monshizadeh et al., entitled "A deep density based and self-determining clustering approach to label unknown traffic.", published in Journal of Network and Computer Applications , 207 (2022): 103513. ; a matrix-based architecture is disclosed, but it cannot handle a traffic flow capture of 200k packets in one time. Instead, ten batches of 20k packets are sequentially processed. As huge memory (~ 40G is needed for each batch), a lot of time is needed for clustering the input data of each batch separately.

SUMMARY

The scope of protection is set out by the independent claims. The embodiments, examples and features, if any, described in this specification that do not fall under the scope of the protection are to be interpreted as examples useful for understanding the various embodiments or examples that fall under the scope of protection.

According to a first aspect, a method comprises:

- obtaining encoded samples by applying input samples of a data set, said input samples comprising a number of input data features as input to a first machine learning model, or encoder, of a machine learning system, said encoded samples comprising fewer encoded features than the number of input data features,
- obtaining a plurality of clusters from said encoded samples,
- determining a clustering loss, said clustering loss being defined as taking on a lower value the more homogeneous and separated the clusters are,
- obtaining reconstructed input samples by applying said encoded samples to a second machine learning model, or decoder, of said machine learning system,
- determining a reconstruction loss based on a difference between the input samples and the reconstructed samples,
- while a stopping condition is not reached, said stopping condition comprising a total loss determined based on said clustering loss and said reconstruction loss, said total loss being less than a best total loss, tuning internal weights of said encoder and said decoder based on said total loss, and reiterating the previous steps.

According to one or more embodiments, the encoder and decoders are MLPs.

According to one or more embodiments, the clustering comprises grouping the encoded samples into regions based on similarity measures and merging connected regions into a same cluster based on a density value.

According to one or more embodiments, determining a clustering loss comprises determining a mean silhouette value for the plurality of clusters.

According to one or more embodiments, another stopping condition comprises a patience counter being equal to or higher than a patience threshold, said patience counter being incremented when the total loss is found not to be less than the best loss and reset when the total loss is found to be less than the best loss.

According to one or more embodiments, the patience threshold is chosen so as to limit the number of iterations being performed without improving the best loss and thus to achieve a trade-off between resource saving and efficiency. For example, it is set to one or more dizains, for example to 10.

According to one or more embodiments, the method comprises, once a stopping condition has been reached:

- retrieving the internal weights of the encoder corresponding to the best total loss and iterating the previous steps of obtaining encoded samples by applying the input samples of the training data set to said encoder using said internal weights and obtaining a plurality of clusters from said encoded samples,
- applying the input samples of the whole dataset to the machine using said retrieved internal weights, to output encoded samples and clustering said encoded samples into a plurality of final clusters.

According to one or more embodiments, the method comprises evaluating the plurality of final clusters based on determining a performance score.

According to one or more embodiments, a homogeneity score or a mean silhouette value are determined, which allow to check the final clusters are separate and homogeneous.

According to one or more embodiments, the dataset is a training dataset comprising target labels associated with said input samples and the evaluating comprises verifying the plurality of final clusters match the associated target labels.

This allows to verify performance of the machine learning system that has been trained with an unsupervised approach is real.

According to one or more embodiments, the input samples are data packets collected at one or more collection points of a telecommunication network.

According to one or more examples, the input samples comprise a combination of packet-based and flow-based header related features. An advantage is that such a combination is very efficient to provide efficient clustering in view of network intrusion detection.

According to a second aspect, a method comprises:

- obtaining encoded samples by applying input samples from a dataset, one of said input samples comprising a number of input data features, a first machine learning model, or encoder of a trained machine learning system, one of said output encoded samples comprising fewer encoded features than the number of input data features,
- obtaining a plurality of clusters from said encoded samples,

said machine learning system having been trained using a training data set, a total loss obtained from on a reconstruction loss based on a difference between input samples from the training dataset and reconstructed input samples output by a second machine learning model, or decoder of the machine learning system, and a clustering loss being defined as taking on a lower value the more homogeneous and separated the clusters of the plurality of clusters are, and tuning internal weights of the encoder and the decoder, while a stopping condition comprising the total loss being less than a best total loss, is not reached.

According to a third aspect, an apparatus comprises means for:

- obtaining encoded samples by applying input samples from a dataset, said input samples comprising a number of input data features as input to a first machine learning model, or encoder, of a machine learning system, said encoded samples comprising fewer encoded features than the number of input data features,
- obtaining a plurality of clusters from said encoded samples,
- determining a clustering loss, said clustering loss being defined as taking on a lower value the more homogeneous and separated the clusters are,
- obtaining reconstructed input samples by applying said encoded samples to a second machine learning model, or decoder, of said machine learning system,
- determining a reconstruction loss based on a difference between the input samples and the reconstructed samples, and
- while a stopping condition is not reached, said stopping condition comprising a total loss determined based on said clustering loss and said reconstruction loss, and being less than a best total loss, tuning (39) internal weights of said encoder and said decoder based on said total loss, and reiterating the previous operations.

According to one or more embodiments, an apparatus comprises processing circuitry for:

- obtaining encoded samples by applying input samples from a data set, said input samples comprising a number of input data features as input to a first machine learning model, or encoder, of a machine learning system, said encoded samples comprising fewer encoded features than the number of input data features,
- obtaining a plurality of clusters from said encoded samples,
- determining a clustering loss, said clustering loss being defined as taking on a lower value the more homogeneous and separated the clusters are,
- obtaining reconstructed input samples by applying said encoded samples to a second machine learning model, or decoder, of said machine learning system,
- determining a reconstruction loss based on a difference between the input samples and the reconstructed samples, and
- while a stopping condition is not reached, said stopping condition comprising a total loss determined based on said clustering loss and said reconstruction loss, and being less than a best total loss, tuning internal weights of said encoder and said decoder based on said total loss, and reiterating the previous operations.

According to a fourth aspect, an apparatus comprises:

- at least one processor;
- at least one memory storing instructions that, when executed by the at least one processor, cause the apparatus to perform the method according to the first aspect.

According to one or more embodiments, an apparatus comprises

- at least one processor;
- at least one memory storing instructions that, when executed by the at least one processor, cause the apparatus to carry out:
- obtaining encoded samples by applying input samples from a data set, said input samples comprising a number of input data features as input to a first machine learning model, or encoder, of a machine learning system, said encoded samples comprising fewer encoded features than the number of input data features,
- obtaining a plurality of clusters from said encoded samples,
- determining a clustering loss, said clustering loss being defined as taking on a lower value the more homogeneous and separated the clusters are,
- obtaining reconstructed input samples by applying said encoded samples to a second machine learning model, or decoder, of said machine learning system,
- determining a reconstruction loss based on a difference between the input samples and the reconstructed samples, and
- while a stopping condition is not reached, said stopping condition comprising a total loss determined based on said clustering loss and said reconstruction loss, and being less than a best total loss, tuning internal weights of said encoder and said decoder based on said total loss, and reiterating the previous operations.

According to a fifth aspect, an apparatus comprises means for:

- obtaining encoded samples by applying input samples from a dataset, one of said input samples comprising a number of input data features, a first machine learning model, or encoder of a trained machine learning system, one of said output encoded samples comprising fewer encoded features than the number of input data features, and
- obtaining a plurality of clusters from said encoded samples,

said machine learning system having been trained using a training data set, a total loss obtained from on a reconstruction loss based on a difference between input samples from the training dataset and reconstructed input samples output by a second machine learning model, or decoder of the machine learning system, and a clustering loss being defined as taking on a lower value the more homogeneous and separated the clusters of the plurality of clusters are, and tuning internal weights of the encoder and the decoder, while a stopping condition comprising the total loss being less than a best total loss, is not reached.

According to one or more embodiments, an apparatus comprises processing circuitry for:

- obtaining encoded samples by applying input samples from a dataset, one of said input samples comprising a number of input data features, a first machine learning model, or encoder of a trained machine learning system, one of said output encoded samples comprising fewer encoded features than the number of input data features, and
- obtaining a plurality of clusters from said encoded samples,

said machine learning system having been trained using a training data set, a total loss obtained from on a reconstruction loss based on a difference between input samples from the training dataset and reconstructed input samples output by a second machine learning model, or decoder of the machine learning system, and a clustering loss being defined as taking on a lower value the more homogeneous and separated the clusters of the plurality of clusters are, and tuning internal weights of the encoder and the decoder, while a stopping condition comprising the total loss being less than a best total loss, is not reached.

According to a sixth aspect, an apparatus comprises:

- at least one processor;
- at least one memory storing instructions that, when executed by the at least one processor, cause the apparatus to perform the method according to the second aspect.

According to one or more embodiments, an apparatus comprises:

- at least one processor;
- at least one memory storing instructions that, when executed by the at least one processor, cause the apparatus to carry out:
- obtaining encoded samples by applying input samples from a dataset, one of said input samples comprising a number of input data features, a first machine learning model, or encoder of a trained machine learning system, one of said output encoded samples comprising fewer encoded features than the number of input data features, and
- obtaining a plurality of clusters from said encoded samples,

said machine learning system having been trained using a training data set, a total loss obtained from on a reconstruction loss based on a difference between input samples from the training dataset and reconstructed input samples output by a second machine learning model, or decoder of the machine learning system, and a clustering loss being defined as taking on a lower value the more homogeneous and separated the clusters of the plurality of clusters are, and tuning internal weights of the encoder and the decoder, while a stopping condition comprising the total loss being less than a best total loss, is not reached.

According to a seventh aspect, a network equipment comprises a machine learning system comprising a first machine learning model, or encoder, configured to provide encoded samples from input data, and a second machine learning model, or decoder, and a clustering module configured to create a plurality of clusters from the encoded samples output by the machine learning system, an apparatus according to the third or fourth aspect and an apparatus according to the fifth or sixth aspect.

According to a eighth aspect, a computer program comprises instructions for causing a computer to perform a method according to the first aspect or the method according to the second aspect.

According to a ninth aspect, a non-transitory computer-readable medium comprises program instructions stored thereon for causing a computer to perform the method according to the first aspect or the method according to the second aspect.

According to one or more embodiments, a non-transitory computer-readable medium comprises program instructions stored thereon for causing a computer to perform:

- obtaining encoded samples by applying input samples from a data set, said input samples comprising a number of input data features as input to a first machine learning model, or encoder, of a machine learning system, said encoded samples comprising fewer encoded features than the number of input data features,
- obtaining a plurality of clusters from said encoded samples,
- determining a clustering loss, said clustering loss being defined as taking on a lower value the more homogeneous and separated the clusters are,
- obtaining reconstructed input samples by applying said encoded samples to a second machine learning model, or decoder, of said machine learning system,
- determining a reconstruction loss based on a difference between the input samples and the reconstructed samples, and
- while a stopping condition is not reached, said stopping condition comprising a total loss determined based on said clustering loss and said reconstruction loss, and being less than a best total loss, tuning internal weights of said encoder and said decoder based on said total loss, and reiterating the previous steps.

According to one or more embodiments, a non-transitory computer-readable medium comprises program instructions stored thereon for causing a computer to perform:

- obtaining encoded samples by applying input samples from a dataset, one of said input samples comprising a number of input data features, a first machine learning model, or encoder of a trained machine learning system, one of said output encoded samples comprising fewer encoded features than the number of input data features, and
- obtaining a plurality of clusters from said encoded samples,

said machine learning system having been trained using a training data set, a total loss obtained from on a reconstruction loss based on a difference between input samples from the training dataset and reconstructed input samples output by a second machine learning model, or decoder of the machine learning system, and a clustering loss being defined as taking on a lower value the more homogeneous and separated the clusters of the plurality of clusters are, and tuning internal weights of the encoder and the decoder, while a stopping condition comprising the total loss being less than a best total loss, is not reached.

BRIEF DESCRIPTION OF THE DRAWINGS

Example embodiments will become more fully understood from the detailed description given herein below and the accompanying drawings, which are given by way of illustration only and thus are not limiting of this disclosure.

FIG. 1 is a schematic diagram illustrating a computing device comprising an apparatus configured to train a machine learning system in providing encoded input data adapted for clustering and an apparatus configured to use the trained machine learning system for clustering said input data, according to an example.

FIG. 2. is a block diagram illustrating an exemplary functional structure of a machine learning system being trained by the method according to an example.

FIG. 3 is a flowchart schematically illustrating a method for training a machine learning system in providing encoded input data adapted for clustering of said input data, according to an example.

FIG. 4 is a flowchart schematically illustrating the training method according to another example.

FIG. 5 is a flowchart schematically illustrating a method for using the trained machine learning system to cluster input data, according to an example.

FIG. 6 is a block diagram illustrating an exemplary hardware structure of an apparatus configured to train a machine learning system to output encoded samples adapted for clustering of input samples and/or an apparatus configured to cluster input samples using said trained machine learning system, according to an example.

It should be noted that these drawings are intended to illustrate various aspects of devices, methods and structures used in example embodiments described herein. The use of similar or identical reference numbers in the various drawings is intended to indicate the presence of a similar or identical element or feature.

DETAILED DESCRIPTION

Detailed example embodiments are disclosed herein. However, specific structural and/or functional details disclosed herein are merely representative for purposes of describing example embodiments and providing a clear understanding of the underlying principles. However, these example embodiments may be practiced without these specific details. These example embodiments may be embodied in many alternate forms, with various modifications, and should not be construed as limited to only the embodiments set forth herein. In addition, the figures and descriptions may have been simplified to illustrate elements and / or aspects that are relevant for a clear understanding of the present invention, while eliminating, for purposes of clarity, many other elements that may be well known in the art or not relevant for the understanding of the invention.

In the following, different exemplary embodiments will be described using, as an example of a context to which the exemplary embodiments may be applied, a communication network implementing a solution for detecting attacks Such a communication network may be for example a fifth generation (5G) network or sixth generation (6G) network, without restricting the exemplary embodiments to such an architecture, however. Prior or subsequent generations of radio telecommunication systems may be concerned by the method and apparatus as disclosed herein. 5G or 6G network. It is obvious for a person skilled in the art that the exemplary embodiments may also be applied to other types of communications networks having suitable means by adjusting parameters and procedures appropriately, such as SDN (for "Software Defined Networks") enabled networks.

**EP 4 660 851 A1**

In the following, an unsupervised approach is proposed based on a neural network architecture called auto-encoder, to solve a co-optimization problem which simultaneously involves minimizing the input data reconstruction loss while encouraging the creation of homogeneous and separate clusters. All the input samples are processed, but the clustering is performed on a reduced number of encoded parameters per samples, which allows saving computation and time resources. The obtained clusters may be further provided to a human expert for analysis. As the clusters are homogeneous and separate, only a few samples of each cluster need to be analyzed by the expert.

Such an autoencoder is especially suited to unsupervised learning and dimensionality reduction as it is capable of learning the essential structure of the input data in a more compact lower-dimensional form. Once trained, the machine learning system can be used in a production phase with the configuration (internal weights and hyperparameters) that led to the best total loss value during the training phase.

The proposed methods and apparatuses apply to any kind input data, but is particularly suited to unknown input data, such as for example data packets and/or flows collected at one or more points of a communication network for purposes of network intrusion detection.

More generally, the methods and apparatuses that will be described hereinafter may also be applied to many other domains than cybersecurity, where a large amount of incoming data needs to be automatically and efficiently clustered in real time. For example, they may be applied to genetics for grouping genome data and discovering which group of genes is involved in a particular disease.

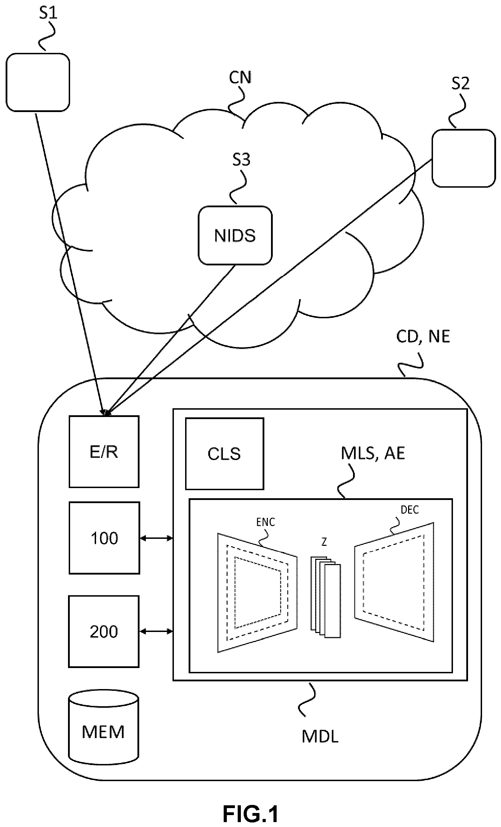

In relation with FIG.1, a communication network CN comprises a computing device CD for example a network equipment,, for example a network controller, and one or more data sources S1, S2, S3 configured to collect input data, or samples, at distinct collection points of the communication network CN. In one or more examples, these input samples are data packets, that may be either benign or malicious. They also can be data flows comprising a plurality of data packets. According to one or more examples, one or more data sources (in FIG. 1, S3) can be a Network Intrusion Data System NIDS. In this case, the samples may be data packets or flows detected as malicious by the NIDS.

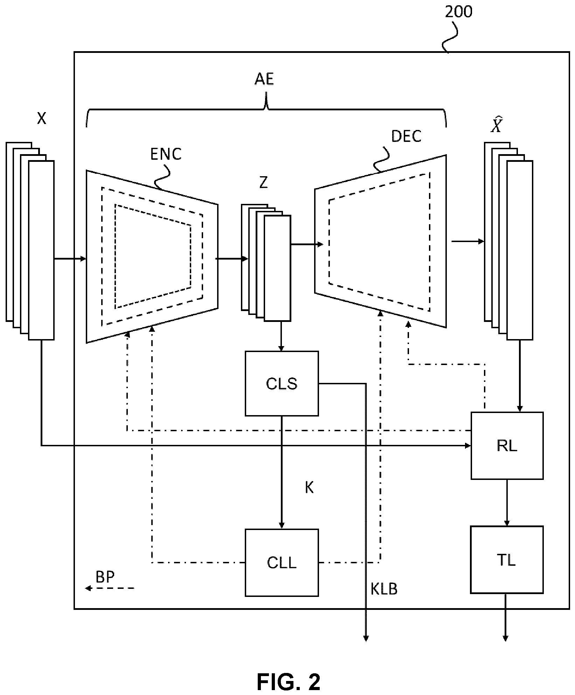

The computing device CD comprises a machine learning system MLS, for instance an auto-encoder AE. Indeed, an auto-encoder is a type of artificial neural network architecture that is well suited to unsupervised learning, particularly to dimensionality reduction, feature learning, and data compression. The machine learning system MLS is composed of an encoder ENC and a decoder DEC, which are configured to work together to learn a compressed or latent representation of the input data. An example of auto-encoder will be detailed hereinafter in relation with FIG. 2.

Back to FIG. 1, the computing device CD further comprises a clustering module CLS configured to create a plurality of clusters from the latent representations of the input data output by the machine learning system MLS. An apparatus 100 is configured to train the machine learning system MLS, AE to output a latent representation of the input data that allows the clustering module CLS to produce a plurality of separate and homogeneous clusters as output.

According to one or more example embodiments, the apparatus 100 is configured to obtain a training dataset of input samples, one of said input samples comprising a number of input data features, apply input samples from a training data set, said input samples comprising a number of input data features to get encoded samples from a first machine learning model, or encoder as output, said encoded samples comprising fewer encoded features than the number of input data features, obtain a plurality of clusters of said encoded samples from the clustering module, determine a clustering loss, said clustering loss being defined as taking on a lower value the more homogeneous and separated the clusters are, applying said output encoded samples to a second machine learning model, or decoder, of said machine learning system, configured to produce reconstructed input samples from said encoded samples, determine a reconstruction loss based on a difference between the input samples and the reconstructed samples, and, while a stopping condition is not reached, said stopping condition comprising a total loss based on said clustering loss and said reconstruction loss, and being less than a best total loss, update internal weights of said encoder and said decoder based on said total loss, and reiterate the previous operations.

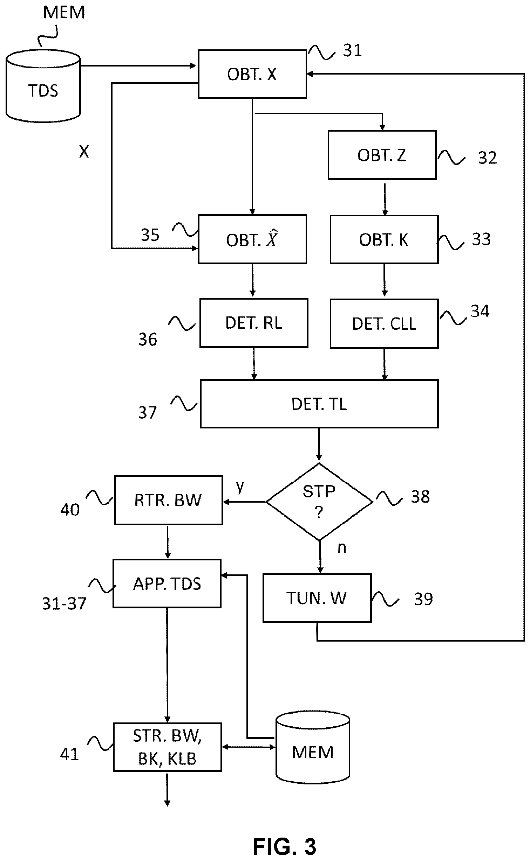

According to one or more examples, the apparatus 100 is configured to implement a method that will be described hereinafter in relation with FIG. 3. In the example of FIG. 1, said apparatus 100 is integrated to the computing device CD. As an alternative, said apparatus 100 may be external to the computing device CD, but connected to it with communication means.

Once the training is over, a final configuration of the machine learning system MLS, AE is stored in a memory, for example the memory MEM of the computing device CD.

Back to FIG. 1, the computing device, CD further comprises an apparatus 200 configured to use the trained machine learning system MLS, AE to output a latent representation of the input data and the clustering module CLS to produce a plurality of separate and homogeneous clusters as output.

According to one or more example embodiments, the apparatus 200 is configured to obtain encoded samples by applying input samples from a dataset, for instance a real dataset, comprising as input data received from the one or more sources S1, S2, S3 by the computing device CD, said input samples comprising a number of input data features, to the encoder ENC of the trained machine learning system MLS; AE and clustering a plurality of clusters from said encoded samples. According to one or more examples plurality of clusters are stored in a memory or directly transmitted through the communication network CN to an expert for further analysis.

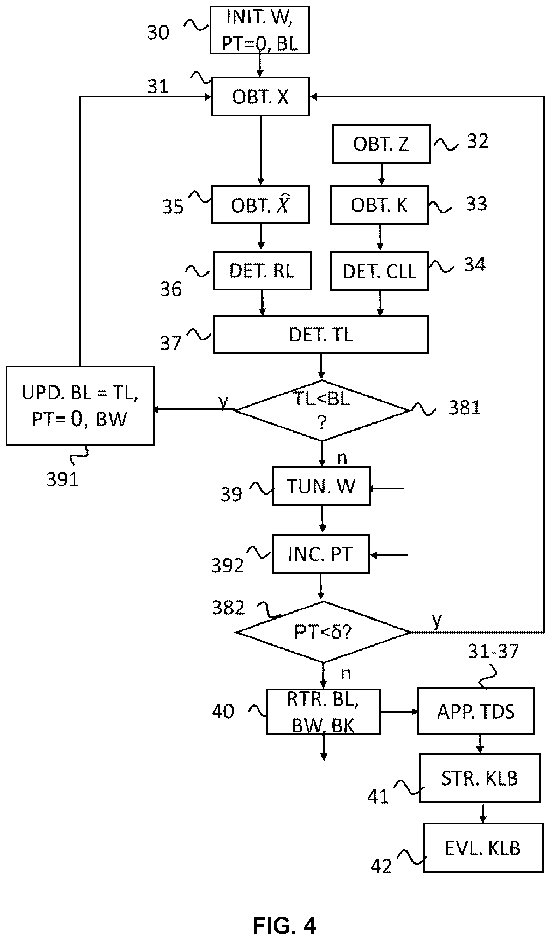

According to one or more examples, the apparatus 200 is configured to implement a method for clustering input data that will be described hereinafter in relation with FIG. 4.

In relation with FIG. 1, the computing device CD, further comprises a communication module E/R adapted to receive and transmit data through the communication network CN, such as the input data collected by the sources S1, S2, S3. It further comprises a memory MEM in which datasets, configuration parameters of the machine learning system MLS, AE and of the clustering module CLS and/or any other useful data may be stored.

In relation with the example embodiment of FIG. 2, the machine learning system MLS is an auto-encoder AE comprising an encoder ENC and a decoder DEC. The encoder ENC implements a first machine learning model and the decoder DEC a second machine learning model, that are both neural networks. During a joint training phase with the decoder DEC, the encoder ENC is expected to learn to map the input data X into a lower-dimensional latent space representation Z. Thus, dimensionality of the latent space is typically smaller than the dimensionality of the input data, and thus the encoded data Z captures the most important features of the input data in a reduced dimensional space. enabling data compression and dimensionality reduction. This may be achieved through a series of hidden layers, typically composed of neural network layers such as dense (fully-connected) layers or convolutional layers. The latent space representation

The decoder DEC is configured to take the latent representation Z provided by the encoder ENC for a given input sample X and to output reconstructed input data $\hat{X}$. Similar to the encoder ENC, the decoder DEC typically consists of hidden layers that transform the latent representation back into the original data space. During the joint training phase, the encoder is expected to learn to generate reconstructed data that closely matches the original input data.

The autoencoder AE is typically trained using unsupervised learning techniques, where it learns to reconstruct the input data without the need for labeled input datasets. The training process involves minimizing a loss function or error that measures the difference between the input data and the reconstructed output. Common loss functions used for autoencoders include mean squared error (MSE) or binary cross-entropy, depending on the nature of the input data.

Autoencoders may be implemented using various types of neural network architectures, depending on the nature of the input data and the specific task. According to a first example, a Fully Connected Autoencoder, also known as a dense autoencoder, may be used, in which both the encoder and decoder consist of fully connected layers. Namely, each neuron in the encoder layer is connected to every neuron in the subsequent layer, and similarly for the decoder. Fully connected autoencoders are suitable for tasks involving structured data, such as tabular data or feature vectors.

According to a second example, a convolution autoencoder is used, where both encoder and decoder consist of convolutional layers. Convolutional layers are effective for capturing spatial patterns in data, making convolutional autoencoders well-suited for tasks involving images or other spatial data. They are commonly used for tasks such as image denoising, image compression, and feature learning in computer vision applications.

According to a third example, a sparse autoencoder is used which introduces sparsity constraints on the activations of the hidden layers. By encouraging a small number of active neurons in the hidden layers, a sparse autoencoder can learn more compact representations of the input data, which is useful for tasks involving high-dimensional data, where feature selection or dimensionality reduction is desirable.

In the following examples, a fully-connected autoencoder is used whose encoder and decoder are Multilayer Perceptrons, MLP, is a type of artificial neural network composed of multiple layers of nodes (neurons) arranged in a feedforward manner. The simplest form of an MLP consists of three layers: an input layer, one or more hidden layers, and an output layer. Each node in the input layer represents an input feature, and each node in the output layer represents an output or prediction. The hidden layers contain nodes that transform the input data into a form that can be used to make predictions. In a MLP, each node is connected to every node in the subsequent layer, and each connection is associated with a weight that determines the strength of the connection. The output of each node is calculated by applying an activation function to the weighted sum of the inputs.

MLPs are trained using techniques like backpropagation, where the neural network adjusts the weights of the connections in order to minimize a difference between its predictions and a target output, here between the reconstructed data and the original input data. They are commonly used for tasks such as classification and regression in machine learning where the input features are typically represented as vectors.

FIG. 3 shows a block diagram of a method for training a machine learning system to output encoded data adapted for clustering according to one or more examples. For instance, said method is implemented by the apparatus 100 of FIG. 1. In the following, the machine learning system in an autoencoder, for example the autoencoder of FIG. 2.

In a step 31, a plurality of input data samples X is obtained.

According to one or more examples, X comprises a number N of input samples xi with i an integer ranging from 1 to N : $X = \{\langle x_i | i = 1, 2, ... N\rangle\}$.

An input sample xi may be represented as a vector comprising a plurality P of input data features. As an example, considering now a cybersecurity application, such an input sample is a data packet that has been received or intercepted by one of the sources S1, S2, S3 whose input data features comprise header-based features of the data packet. As an alternative, they come from a training dataset TDS stored in a memory, for example the memory MEM of the computing device CD or a memory of the apparatus 100.

In one or more examples, the training dataset comprises NT input samples, for instance equal to 20k. Depending on computing and memory resources, the whole training data set may be processed in one run or in several runs. In the latter case, the training dataset is divided into a plurality of smaller batches that are processed sequentially. For instance, in the domain of network intrusion detection, such a batch comprises N = 1k input samples corresponding to data packets. In machine learning, an epoch refers to one complete pass through the entire training dataset during the training phase. Training typically involves running multiple epochs until the model converges to an acceptable level of accuracy or until a specified stopping criterion is met. Parameters of the model, such as neural weights; are adjusted based on a loss function at the end of each epoch.

In the following, processing of one given epoch is described. it is assumed for sake of simplicity that the whole data set is processed in one run.

In one or more examples, the P input data features are header-based features. In one or more examples, they comprise flow-based features and packet-based features. For example, P is worth several tens, for instance 72, as will be detailed in the example below.

In a step 32, a compressed or latent representation Z of the plurality of input data samples X is obtained from the encoder ENC of the machine learning system MLS. According to one or more examples, Z comprises a number L of encoded samples zj with j an integer ranging from 1 to L : $Z = \{(z_j | i = 1,2, \dots L)\}$.

The transformation performed by the encoder network ENC may be represented as follows: $z_i = E_\theta(x_i)$ where $\theta$ denotes the trainable parameters, that is neural weights, of the encoder network ENC.

The number L is set as an hyperparameter of the autoencoder. By definition, L is chosen smaller than N. In one or more examples, L is worth several units, for instance 6, as will be detailed in the example below.

In a set 33, the plurality of encoded samples Z is clustered into a plurality of clusters K using a clustering technique. According to one or more examples, K comprises a number M of clusters ki with i an integer ranging from 1 to M: $K = \{\langle k_i | i = 1,2, \dots M \rangle\}$.

According to one or more examples, the clustering comprises grouping the encoded samples into regions based on similarity measures and merging connected regions into a same cluster based on a density value.

In one or more exemplary and non-limiting embodiments, a DBSCAN ("Density-Based Spatial Clustering of Applications with Noise") technique is applied. This is a popular clustering algorithm used in machine learning and data mining, which does not require a number of clusters to be specified beforehand, making it advantageous in scenarios where the number of clusters is unknown. It is for instance described in the document by Khan et al., entitled "DBSCAN: Past, present and future", published in The Fifth International Conference on the Applications of Digital Information and Web Technologies (ICADIWT), in 20214. pp. 232-238. Briefly, the DBSCAN technique identifies clusters based on a density measurement of points in a dataset, based on two parameters:

- Epsilon ($\epsilon$): This parameter determines a maximum distance, or radius around each point within which neighboring points are being searched,
- Minimum Points (MinPts): This parameter specifies a minimum number of points required within the epsilon radius to form a distinct and dense cluster for a point to be considered a core point.

In order to form a cluster, the DBSCAN algorithm starts with selecting an arbitrary point from the dataset. If the point is a core point, that is a point having at least MinPts points (including the point itself) within its $\epsilon$-neighborhood it forms a new cluster and expands it by recursively adding all reachable points within $\epsilon$ distance. If the neighborhood of an object p contains more points than MinPts, a new cluster with p as the core-point is created It then iteratively collects the objects directly reachable from these core points, which may involve merging multiple clusters. The process continues until all points have been assigned to a cluster or marked as noise. An advantage of the DBSCAN clustering technique is that it does not require a number of clusters to be specified beforehand, making it advantageous in scenarii where the number of clusters is unknown. Another advantage of DBSCAN is that it is robust to outliers and can handle clusters of arbitrary shapes and sizes. However, it requires careful parameter tuning, particularly for $\epsilon$ and MinPts, to achieve optimal clustering results.

In a step 34, a Clustering Loss CLL is determined. According to one or more embodiments, determining said clustering loss comprises determining a mean silhouette score for the plurality of clusters.

The mean silhouette score is a known metric used to evaluate a quality of clusters created by clustering algorithms, which measures how similar a sample is to its own cluster compared to other clusters.

For each sample in the dataset, the silhouette value is calculated. This is a measure of how close the sample is to the other samples in its own cluster compared to the samples in the nearest neighboring cluster. It ranges from -1 to 1, where:

A silhouette value of +1 indicates that the sample is far away from the neighboring clusters, meaning it is well-clustered.

A silhouette value of 0 indicates that the sample is close to a decision boundary between clusters.

A silhouette value of -1 indicates that the sample may have been assigned to the wrong cluster.

A mean silhouette score or value MSV is then derived by averaging the silhouette value of all the samples in the dataset. The mean silhouette value or score is a known metric used to evaluate a quality of clusters created by clustering algorithms, which measures how similar a sample is to its own cluster compared to other clusters.

This provides an overall measure of the quality of the clustering. A higher mean silhouette score indicates better-defined clusters, with samples well-clustered and clearly separated from other clusters. The mean silhouette value MSV helps to quantify the coherence and separation of clusters produced by a clustering algorithm. It is a valuable tool for determining the appropriate number of clusters and assessing the effectiveness of the clustering process.

In one or more examples, we consider a mean intra cluster distance ai of the cluster kl as a distance between each encoded sample zi belonging to the cluster kl, and the rest of encoded samples zj within the same cluster kl, as follows:

$$a_i = \frac{1}{|k_l|-1}\sum_{j\in k_l, i\neq j}\left\|z_i - z_j\right\|_2 \quad \text{(Equation 1)}$$

Where $|k_l|$ is a number of encoded samples belonging to the cluster kl.

We now define a mean inter-cluster distance bi, while (zj) denotes the encoded samples of the of nearest cluster km to each encoded sample zi belonging to cluster kl as follows:

$$b_i = min_{m\neq l}\frac{1}{|k_l|}\sum_{j\in k_m}\left\|z_i - z_j\right\|_2 \quad \text{(Equation 2)}$$

A distance matrix for the whole batch Z is derived from these distances ai and bi.

A silhouette value si corresponding to encoded sample zi is defined as follows:

$$s_i = \frac{b_i - a_i}{\max{(a_i, b_i)}} \quad \text{(Equation 3)}$$

In Equation (3) and as defined above, ai is the mean intra-cluster distance between the latent features of the encoded sample zi corresponding to each data point xi of the input dataset belonging to the cluster kl and the latent features of the rest of the data points within the same cluster kl.

$b_i$ is the mean inter-cluster distance bi, while (zj) denotes the encoded samples of the of the nearest cluster km to the latent features of the encoded sample zi corresponding to each data point xi belonging to the cluster kl.

si is the silhouette value corresponding to the latent features of the encoded sample zi corresponding to each data point xi.

The silhouette value si is ranged between -1 and 1.

A mean silhouette value MSV for the plurality N of input samples X is derived as follows:

$$MSV = \frac{1}{N}\sum_{i=1}^{N} s_i \quad \text{(Equation 4)}$$

Since the silhouette value for each data point is ranged between -1 and 1, the mean silhouette value is within the same range.

Eventually, it is aimed to maximize the mean silhouette value for all encoded samples of Z to achieve distinct and homogeneous clusters. Indeed, the higher the mean silhouette value MSV, the more homogeneous and well separated the clusters.

According to one or more embodiments, a clustering loss CLL is defined by subtracting the mean silhouette value MSV from 1 which is always positive or null, as follows:

$$CLL = 1 - \frac{1}{N}\sum_{i=1}^{N} s_i \quad \text{(Equation 5)}$$

Back to FIG. 3, the encoded samples Z are applied in 35 to decoder DEC and reconstructed samples $\hat{X}$ are output.

X has the same number N of reconstructed samples than the input dataset X: $\hat{X} = \{\langle \hat{x_i} | i = 1,2, \dots N \rangle\}$.

The reconstruction performed by the decoder network DEC may be represented as follows: $\hat{x_i} = D_\varphi(z_i) = D_\varphi\big(E_\phi(x_i)\big)$; where the encoder and decoder networks are denoted by E and their trainable parameters are denoted by $\phi$ and $\varphi$ respectively.

In a step 36, a reconstruction error or loss RL is determined based on a difference between the input samples and the reconstructed samples. According to one or more examples, the reconstruction loss is a mean square error (MSE). In one or more examples, it is calculated as follows:

$$RL = \frac{1}{N}\sum_{i=1}^{N}\|x_i - \hat{x_i}\|_2^2 \text{ (Equation 6)}$$

The less the reconstruction error RL, the better original features of the input samples are kept intact when encoded into lower dimensions, meaning the more the original pattern of input data are preserved in the encoded samples Z.

In a step 37, a total error or loss TL is determined based on the reconstruction loss RL and the clustering loss CLL. According to one or more embodiments, the total loss is a combined loss function determined by summing the clustering loss CLL with the reconstruction loss RL.

$$TL = RL + CLL = \frac{1}{N}\sum_{i=1}^{N}\|x_i - \hat{x_i}\|_2^2 + \left(1 - \frac{1}{N}\sum_{i=1}^{N}s_i\right) \text{ (Equation 7)}$$

In one or more examples, a minimal total loss TL is determined as follows:

$$min_{\phi,\varphi}TL = \frac{1}{N}\sum_{i=1}^{N}\left\|x_i - D_\varphi(E_\phi(x_i))\right\|_2^2 + (1 - \qquad \text{(Equation 8)}$$

$$\frac{1}{N}\sum_{i=1}^{N}\frac{min_{m\neq l}\frac{1}{|k_l|}\sum_{j\in k_m}\left\|E_\phi(x_i) - E_\phi\big(x_j\big)\right\|_2 - \frac{1}{|k_l|-1}\sum_{j\in k_l, i\neq j}\left\|E_\phi(x_i) - E_\phi\big(x_j\big)\right\|_2}{max\left(min_{m\neq l}\frac{1}{|k_l|}\sum_{j\in k_m}\left\|E_\phi(x_i) - E_\phi\big(x_j\big)\right\|_2, \frac{1}{|k_l|-1}\sum_{j\in k_l, i\neq j}\left\|E_\phi(x_i) - E_\phi\big(x_j\big)\right\|_2\right)}$$

Each original data point i is denoted by xi, and the corresponding reconstructed output by the decoder is denoted by Dφ (Eφ(xi)). Finally, the latent features of the encoded sample zi corresponding to each data point xi are denoted by Eφ (xi).

According to one or more embodiments, the max and min functions are approximated as follows:

$$mm_\alpha(x_1, x_2, \dots, x_n) = \frac{1}{\alpha}\log\left(\frac{1}{n}\sum_{i=1}^{n}e^{\alpha x_i}\right) = \begin{cases} max(x_1, x_2, \dots, x_n), if\ \alpha \rightarrow +\infty \\ min(x_1, x_2, \dots, x_n), if\ \alpha \rightarrow -\infty \end{cases}$$

(Equation 9)

Where $\alpha$ is a real number.

This function, called "Mellowmax", is described in the document by Asadi et al., entitled "An alternative softmax operator for reinforcement learning", published by Doina Precup and Yee Whye Teh, editors, in the Proceedings of the 34th International Conference on Machine Learning, volume 70 of Proceedings of Machine Learning Research, pages 243-252. PMLR, 06-11 Aug 2017. It is applied in Equation (6), in place of minimum and maximum functions, because this "Mellowmax" function is differentiable and can approximate minimum and maximum values very well. In a non-limiting example, $\alpha$ is set to 10000 for maximum approximation, and a negative $\alpha$ is applied for minimum approximation.

In case the training dataset is divided into several smaller batches, the total loss associated with the current batch is stored in a memory and steps 31-37 are repeated for a next batch and until all the batches have been processed.

In a step 38, once the whole training data set has been applied once to the MLS, stopping conditions are checked. As a goal is to minimize the total loss, they at least comprise a first condition related to a given best loss BL, namely the current total loss is less than the best loss BL. As will described hereinafter in relation with FIG. 4, according to one or more embodiments, a second condition may be applied related to a number of iterations of the training process.

If none of the stopping conditions is met, update of internal parameters of the machine learning system MLS, namely internal weights of the encoder ENC and decoder DEC of the autoencoder AE, is triggered in 39, based on backpropagation of the total loss TL and a new training iteration of steps 31-38, corresponding to a new epoch, is launched with samples of the training dataset TDS. This allows to tend to minimize the total loss, thus to maximize the reconstruction loss RL of the input samples while shifting mean silhouette value towards the positive range of 0 to 1 over training iterations. Once the mean silhouette value reaches the positive range between 0 and 1, it is added to the reconstruction loss as a negative value, resulting in decreasing the combined loss and updating parameters, which results in higher cluster separability and pushes the mean silhouette value towards 1. As a result, we simultaneously can minimize the reconstruction loss and maximize the mean silhouette value at each iteration until the moment that we cannot minimize the combined loss any longer.

Otherwise, if one of the stopping conditions is met, the training process stops and best configurations parameters of the machine learning system MLS, AE corresponding to a best loss BL are retrieved in 40, for instance from a memory of the apparatus 100 or the computing device CD, NE. They are then applied to the whole training dataset TDS by reiterating the previously described steps 31-37 with the machine learning system MLS using the retrieved internal weights corresponding to the best loss, to get final clustering labels KLB for the whole training data set. In 41, the results are stored in memory.

In relation with FIG. 4, another embodiment of the method is now described in more details. In the following, common steps with those of FIG. 3 have the same number.

In a step 30, trainable parameters of the machine learning system MSL of the clustering module CLS and of the training method are set. For the MLS, they comprise for instance internal weights W of the encoder and decoder neural networks that are set based on random initializations. Regarding the clustering module CLS based in this example on a DBSCAN technique, the main parameter, or hyperparameter to be tuned is the distance Epsilon ($\varepsilon$): This hyperparameter determines a distance, or radius around each point within which neighboring points are being searched. Experiments have shown that best performances were achieved with a value of $\varepsilon$ less than 0.07, for instance 0.04 and that with values of above 0.07 the homogeneity score was no longer stable. Regarding the training method, a best loss variable BL is set to a maximum value, for instance infinity and an iteration or patience counter PT is set to an initial value, for instance zero.

According to one or more embodiments, other types of hyperparameters may be tested. Regarding the machine learning system MLS, the following hyperparameters may be tuned:

- a number of layers used, or network depth, of the encoder and decoder,
- a number of neurons or units per layer,
- a Learning Rate that is a step size in the gradient descent optimization algorithm. It determines how much the internal weights of the neural network are updated during each iteration,
- a size of batch X, that is a number of input samples used in each iteration of training. It affects the speed and stability of the training process and a number of features in each input sample,
- a type of optimization algorithm used during training, such as Adam, SGD (Stochastic Gradient Descent), RMSprop, etc.
- a type of Regularization Techniques: Regularization methods like dropout or L1/L2 regularization can be applied to prevent overfitting,
- etc.

A first iteration of the training process is executed. Steps 31-37 are unchanged with respect to FIG. 3. Original input data samples X are applied to the encoder network ENC. Encoded samples Z are obtained. They are given to the decoder network DEC to get reconstructed input samples $\hat{X}$. Encoded samples Z are given to the clustering module CLS to be clustered, for instance using a DBSCAN technique. A distance matrix is obtained based on the equations described above and M clustering labels are derived. AA reconstruction loss is determined in 36, a cluster loss CLL in 34. A total loss TL is obtained in 37 from the reconstruction loss RL and the cluster loss CLL for instance as described above.

In a step 381, a first stopping condition is checked, as described above. The current total loss TL is compared with the best loss BL. If the current total loss TL is greater than the best loss BL, the internal parameters W of the encoder and decoder networks are tuned in 39 by backpropagating the total loss TL. In a step 392, the patience counter PT is incremented by 1. Then, a second stopping condition is checked in a step 382. If the current patience counter PT is less than a threshold $\delta$, a next iteration is launched and steps 31-381 are executed again. Otherwise, the training process is stopped. Configurations parameters BW associated with the best loss BL are retrieved in 40 and the whole training dataset TDS is applied to the MLS using the parameters BW. Resulting final cluster labels KLB are stored in 41.

Use of a patience counter and threshold allows for stopping the training process when the best loss cannot be further improved and thus to optimize computation time.

In a step 42, clustering performances are evaluated for the final clusters on the whole dataset, using one or more evaluation metrics.

According to one or more examples, a homogeneity score h of the resulting clusters K is determined. A clustering result K satisfies homogeneity if all of its clusters contain only input samples which are members of a single class. The homogeneity score takes values between 0 and 1, with high values indicating a good clustering outcome. Homogeneity score h is determined using the following formula:

$$h = \begin{cases} 1 & if\ H(C,K) = 0 \\ 1 - \frac{H(C|K)}{H(C,K)} & else \end{cases} \qquad \text{(Equation 10)}$$

where,

$$H(C|K) = -\sum_{k=1}^{|K|}\sum_{c=1}^{|C|}\frac{A_{ck}}{N}\log\frac{A_{ck}}{\sum_{c=1}^{|C|}A_{ck}} \qquad \text{(Equation 11)}$$

$$H(C,K) = -\sum_{k=1}^{|K|}\sum_{c=1}^{|C|}\frac{A_{ck}}{N}\log\frac{A_{ck}}{N} \qquad \text{(Equation 12)}$$

where,

$N$ is sum of data points
$C = \{c_i \mid i = 1, ..., n\}$ is a set of labels
$K = \{k_l \mid j = 1, ..., m\}$ is the set of created clusters

$A$ represents a contingency table produced by the clustering algorithm, indicating a number of input samples $x_{ck}$ being associated with label $c_i$ and elements of cluster $k_j$.

When, all the input samples of cluster $kj$ have the same label $ci$, the homogeneity score equals 1.

However, this evaluation metric needs to use a training dataset with target labels ci associated with the input data samples.

According to other example, the mean silhouette value may be used as an evaluation metric. An advantage is that it indicates how well clusters are apart from each other and clearly distinguished.

In one or more examples, both evaluation metrics are used simultaneously.

The training process may be repeated for different sets of hyperparameters, set in initialization step 30. The training dataset may be used one or more times during the training phase depending upon configuration.

Once the training phase is over, the set of hyperparameters and associated internal weights BW leading to the best performances are retrieved and used to provide a production version of the machine learning system MLS that is charged in the apparatus 200.

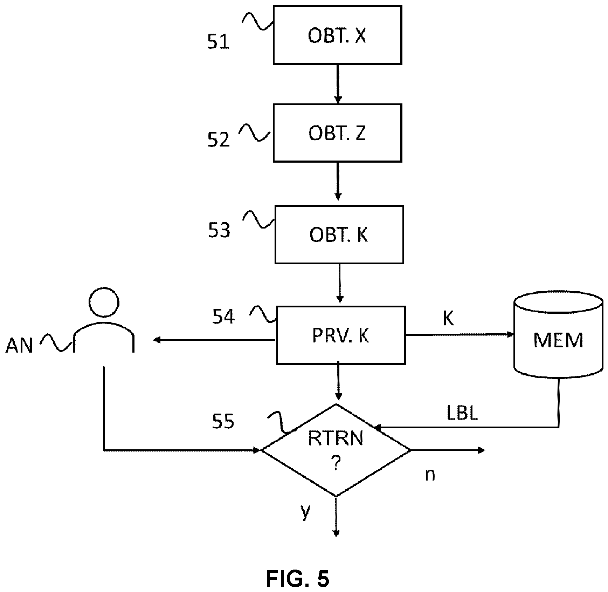

In relation with FIG. 5, a method of use of said trained machine learning system MLS for providing a plurality of separate and homogeneous clusters of a dataset of input samples, is now described according to one or more examples. We suppose here the method is implemented by the apparatus 200 of FIG. 1, in cooperation with the trained machine learning system MLS.

In a step 51, a plurality of input data samples or batch X with $X = \{\langle x_i|i = 1,2, ... N\rangle\}$. is obtained. The input data samples are vectors of features having the same structure as the input data samples used for training the machine learning system MLS.

In a step 52, the input samples of batch X are applied to the network encoder ENC of the machine learning system MLS which output corresponding latent or encoded vectors Z with $Z = \{\langle z_i|i = 1,2, ... L\rangle\}$.

In a step 53, the encoded samples are applied to the clustering module CLS configured to output a plurality of clusters K with $K = f(k, 11 = 1,2, ... M\rangle\}$.

According to one or more embodiments, information about the plurality of clusters K is provided in a step 54 to a user, namely an analyst or expert, for further investigation. They make take the form of a contingency table associating cluster labels KLB corresponding to the created clusters with a number of input data samples belonging to them. When the size of the input dataset is huge, clusters that contain less input samples than a given threshold may be discarded. Moreover, the number of input data samples per cluster may be converted into a percentage of the total number of input data samples in the dataset. This may help the expert decide which cluster has to be analysed first. As the clusters created by the method are separate and homogeneous, only few input samples per cluster need to be investigated. The expert will assign them a true label (for instance a type of attack) in a completed contingency table, as will be detailed hereinafter in relation with TABLE 3. Result of this investigation may be generalized to the entire cluster, which helps the expert with reducing time and computation resources dedicated to this task.

These results, in particular, the detected attack packets may be used to retrain the machine learning system. Such a retraining may be launched in 55 on a regular basis, for example after a time threshold (e.g., monthly) or after a given amount of input data has been processed. According to one or more examples, it may be triggered in case new types of attacks have been detected by the expert. The thresholds and conditions to launch a new training phase may depend on the application and computation constraints.

**Experimental results**

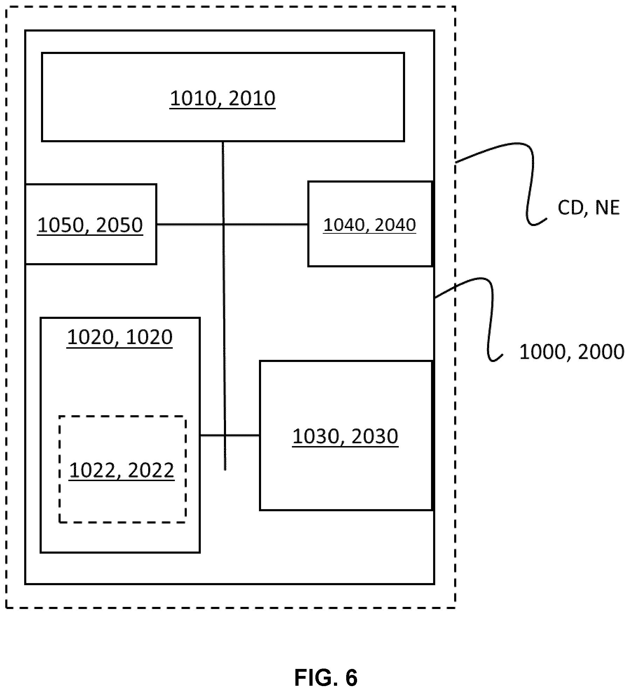

Experimental results are now presented in the technical domain of cybersecurity, in relation with FIG 6 and tables 2 and 3.

Configuration of the autoencoder

In one or more examples, the autoencoder AE has the structure described in TABLE 1.

TABLE 1: Autoencoder architecture

| Layer | Number of features | Layer type | Activation |
|-------|--------------------|------------|------------|
| 1 | 72 | Input | |
| 2 | 64 | Dense | ReLu |
| 3 | 32 | Dense | ReLu |
| 4 | 16 | Dense | ReLu |
| 5 | 10 | Dense | ReLu |
| 6 | 6 | Dense | ReLu |
| 7 | 10 | Dense | ReLu |
| 8 | 32 | Dense | ReLu |
| 9 | 64 | Dense | ReLu |
| 10 | 72 | | |

In the example of TABLE 1, the number of layers in both the encoder and decoder, including the input and output layers is 10. The encoder comprises 5 layers 1-5 and the decoder 5 layers 6-10. The input data samples are vectors of P=72 features. The latent space has a dimension of Q=6, which means that the encoded samples are vectors $z_i$ having 6 latent features.

As described above, a max iteration threshold PT (or patience) is used so as to stop the training process earlier when the loss cannot be optimized any longer. In this case, the best loss at the best epoch is retrieved.

According to one or more examples, the autoencoder AE has been implemented using TensorFlow-Keras framework.

implementation strategy:

In order to evaluate performance of proposed architecture the three following publicly available training datasets were used: CIC-IDS-2017, UNSW2015 and CTU-13. CIC-IDS-2017 is described in document by Sharafaldin et al, entitled "Toward generating a new intrusion detection dataset and intrusion traffic characterization", published in 2018. pages 15, 16, 23. UNSW2015 is described in document by Moustafa et al, entitled "Unsw-nb15: a comprehensive data set for network intrusion detection systems (unsw-nb15 network data set)", published in 2015, in the proceedings of Military Communications and Information Systems Conference (MilCIS), pages 1-6, 2015 and CTU-13 is described in document by Garcia et al., entitled "An empirical comparison of botnet detection methods", in computers & security, 45:100-123, 2014. For example, Heartbleed is a security vulnerability in the OpenSSL cryptographic software library which allows attackers to retrieve sensitive information from the memory of a server, including encryption keys, usernames, and passwords, by exploiting a flaw in the implementation of the TLS heartbeat extension. XSS (Cross-Site Scripting) is a type of security vulnerability that allows attackers to inject malicious scripts into web pages viewed by other users. These scripts can hijack user sessions, deface websites, steal information, or perform other malicious actions. SQL Injection is a code injection technique used to attack data-driven applications. Attackers inject malicious SQL code into input fields, which is then executed by the application's database server. This can allow attackers to bypass authentication, retrieve or modify sensitive data, or execute arbitrary commands on the database server.

More precisely, performance was evaluated for the subsets of these datasets which are described in TABLE 2 below.

TABLE 2: Dataset flow distribution

| Dataset | | Class | Target label | # flows |
|---|---|---|---|---|
| CIC-IDS-2017 | | SSH-Patator | Brute force | 6470 |
| | | FTP-Patator | | |
| | | Web attack brute force | | |
| | | DoS slowloris | DoS | 48393 |
| | | DoS Slowhttptest | | |
| | | DoS Hulk | | |
| | | DoS GoldeEye | | |
| | | DDoS LOIT | | |
| | | Heartbleed | Exploit | 7417 |
| | | XSS | | |
| | | SQL-injection | | |
| UNSW-2015 (January) | | Exploit | | |
| CIC-IDS-2017 | | ARES | Botnet | 19244 |
| CTU-13 | 42-43 | NERIS | | |
| | 44-45 | Rbot | | |
| | 46-54 | Virut | | |
| | 47 | DonBot | | |
| | 48 | Sogou | | |
| | 49 | Murlo | | |
| | 53 | NSIS.ay | | |

In this example, target labels correspond to classes of attacks. For example, a brute force attack is a trial-and-error method used by attackers to decode encrypted data such as passwords or encryption keys. It involves systematically trying all possible combinations until the correct one is found. This method is often resource-intensive and time-consuming but can be effective if the encryption is weak or if the attacker has sufficient computing power. A Denial of Service (DoS) attack is a malicious attempt to disrupt the normal functioning of a targeted server, service, or network by overwhelming it with a flood of traffic or requests. This flood of traffic can exhaust the target's resources, making it unable to respond to legitimate requests, effectively denying service to legitimate users.In this example, hybrid input samples are used comprising a combination of packet-based and flow-based features. Exploit attacks take advantage of vulnerabilities in software or systems to gain unauthorized access, retrieve sensitive information, or perform malicious actions. In each case, the attacker exploits a weakness in the target system's design or implementation to achieve their goals. A botnet attack is a coordinated assault orchestrated by a network of compromised computers, known as bots or zombies, controlled remotely by an attacker. These compromised machines, often infected with malware, can be used to perform various malicious activities, such as launching Distributed Denial of Service (DDoS) attacks, sending spam emails, stealing sensitive information, or spreading further malware. Botnets are typically controlled through a centralized command-and-control infrastructure, allowing the attacker to wield significant power over the network of compromised devices.

An illustrative and non-limitative list of flow-based features is given below:

- IP Addresses.
- Ports

- Protocol
- Packet Count: The number of packets exchanged in the flow.
- Byte Count: The total number of bytes exchanged in the flow.
- Start Time: The timestamp indicating when the flow started.
- End Time: The timestamp indicating when the flow ended.
- Duration: The time duration of the flow (End Time - Start Time).
- TCP Flags: In the case of TCP traffic, flags like SYN, ACK, FIN, etc., provide information about the state of the connection.
- Packet Length Statistics: Mean, standard deviation, minimum, and maximum lengths of packets in the flow.
- IP Type of Service (ToS): Specifies the quality of service requested for the flow.
- IP Time-to-Live (TTL): The maximum number of hops a packet can take before being discarded.
- Fragmentation Information: Indicates if the packets are fragmented and provides details.
- Directionality: Specifies the direction of the flow, whether it's incoming or outgoing.
- Flow ID: A unique identifier for the flow.
- Application Layer Protocol: Identification of the application-layer protocol being used (e.g., HTTP, DNS, FTP).
- DNS Information: If applicable, details about DNS queries and responses.
- Quality of Service (QoS) Marking: Information related to QoS markings in the flow.
- An illustrative and non-limitative list of packet-based features is given below:
- IP address
- Ports
- MAC address
- Frame length on the wire
- Frame epoch time
- IP Fragment Offset
- ICMP type
- Time delta from previous captured frame
- ICMP code
- IP Differentiated Services Codepoint
- IP length
- IP identification
- IP Flags
- IP time to live
- IP protocol
- TCP push flag
- IP Header Checksum
- TCP SYN flag
- IP More fragments
- TCP FIN flag, etc.

In an example embodiment, the input samples are vectors comprising a combination of P=72 flow-based and parameter-based features.

It turns out from experimentations that such a combination allows to improve the effectiveness of the proposed solution by leveraging the advantages of both packet-based and flow-based analysis. On the one hand, we get the benefits of scalability and efficiency of flow-based feature representation in data-intensive tasks, such as clustering, because the flow-based features are representative of the whole corresponding flow, and there is no need to analyze all packets one by one in a consecutive fashion. On the other hand, metadata features that are available at the packet level provide insights regarding granularity, content inspection, and protocol-specific information. Therefore, the hybrid analysis inspection provides more discriminative features compared to other policies.

In order to select the best hyperparameters, different values for each hyperparameter (e.g., epsilon) were set and the entire machine learning model run consequently for those values. We then selected the hyperparameters that provide the best silhouette score. In this regard, a value of epsilon ranged between 0.01 and 0.07 leads to the highest and most stable value for homogeneity score. In this experiment, all of the runs were done using a subset of the datasets of TABLE 2.

In this experiment, the employed data samples, here packets or flows already have associated target labels. These target or true labels will be used in the later stage to verify performance of the architecture is actual. In a similar manner to sandbox, results of clustering performed on a special dataset is verified offline in an environment where the classified packets or flows are processed by a checking module configured to check if they are labeled correctly by comparing the results with the true labels (for example, a class of attack) associated with the samples of this special dataset. In our example we used same concept. However, in a real-life scenario these target labels for the packets/flows are not available and a human expert, for instance a security investigator, is needed to analyse and label the created clusters.

Performance Evaluation:

Experiments have been conducted with different epsilon values. The best performance turned to be achieved when epsilon is set to values lower than 0.07 (e.g., 0.04). Experiments showed that for a value of epsilon = 0.04, the obtained homogeneity and silhouette scores are respectively 0.999 and 0.85, which are extremely good values in the domain of unsupervised clustering. This also indicates that created clusters have minimum overlapping. With such an homogeneity score is high, the clusters are mainly composed of the same type of packets (attack category). In this regard, it should be noted that the 0.999 homogeneity score could be 1 if noise of the dataset were discarded.

In addition, the computation time is very low for the proposed architecture. Above one million packets are clustered in 76 seconds which is near real time. Considering real life scenarios and the supported Maximum Transmission Unit (MTU) for 5G network this time is actually real time. It should also be noted that for larger traffic size, several of these modules can be run in parallel for load balancing purpose.

Cluster Analysis

Table 3 provides insights based on the created clusters to a cybersecurity investigator to help in detecting unknown attacks. In this table, the numbers indicated in columns of true labels correspond to a number of flows assigned to the associated cluster. In order to get a number at a packet level the corresponding number of packets of the flows should be summed up.

The packets present in each cluster are homogeneous as they were grouped based on their features. Thus, to perform cluster composition analysis, the expert only needs to analyze a few samples instead of thousands of packets, and to generalize the result to the entire cluster, which helps them with reducing the time and computation resources.

Referring to table 3, Cluster with cluster label KLB =-1 contains outliers (noise). Packets belonging to this cluster are dissimilar to each other. Moreover, they may overlap with the other clusters, which is normal with unsupervised learning. An important point is the number of the outliers is really low.

Clusters labeled -1, 0, 1, 2, 4, 16 and 17 contain packets of "Botnet" type. The proposed solution has thus created 7 clusters for Botnet which precisely corresponds to the number of different target labels for this type of attack. Thus, the proposed solution proves to have correctly categorized Botnet attacks. Meanwhile, if there is an overlapping between Botnet and Exploit attacks, it only occurred in cluster 2 and is negligible (only 1 flow).

Clusters labeled -1, 5, 6, 7, 8, 10 and 11 contain only packets of DoS attack type, whereas the original datasets counted 5 different target labels corresponding to DoS attacks. However, clusters -1 and 11 could be suppressed because they contain less packets than a packet threshold, for example set to 1% of the total number of packets or flow in all DoS clusters. Clusters 9 and 12 only contain packets of BruteForce attack type without overlapping. Table 2 indicated that original datasets have three target labels of BruteForce type with two of them corresponding to a "patator" class, which the proposed solution categorized into two clusters.

| Clustering labels KLB | NRT-MAC Result | True labels | | | |
|---|---|---|---|---|---|
| | | DoS | BruteForce | Exploit | Botnet |
| | -1 | 5 | 0 | 16 | 3 |
| | 0 | 0 | 0 | 0 | 7305 |
| | 1 | 0 | 0 | 0 | 6 |
| | 2 | 0 | 0 | 19 | 1 |
| | 3 | 0 | 0 | 173 | 0 |
| | 4 | 0 | 0 | 0 | 11224 |
| | 5 | 23713 | 0 | 0 | 0 |
| | 6 | 109 | 0 | 0 | 0 |
| | 7 | 226 | 0 | 0 | 0 |
| | 8 | 13889 | 6 | 0 | 0 |
| | 9 | 0 | 6411 | 0 | 0 |
| | 10 | 10384 | 0 | 0 | 0 |
| | 11 | 67 | 0 | 0 | 0 |
| | 12 | 0 | 53 | 0 | 0 |
| | 13 | 0 | 0 | 4546 | 0 |
| | 14 | 0 | 0 | 2649 | 0 |
| | 15 | 0 | 0 | 14 | 0 |
| | 16 | 0 | 0 | 0 | 456 |
| | 17 | 0 | 0 | 0 | 249 |

TABLE 3 : Cluster analysis

If the size of dataset is huge, in the analysis process, clusters that contain less than the packet threshold may be discarded. For the rest of the clusters and for decreasing computation resources, the packet numbers in each cluster will be converted to percentage of total number of packets. This helps if a human, for instance an expert, such as a security investigator, does the analysis and when there are millions of packets in the cluster analysis table (similar to Table 2). In such scenario, human expert can decide which cluster has the priority to be analyzed first or which type of attack it may be (e.g., volumetric DoS). Furthermore, security investigator may leverage supplementary information associated with the packets of a cluster to identify the malicious clusters. For example, their associated timestamp in relation to information related to a physical location of the data packets could be considered as relevant indicators by them. For example, a huge number of packets classified in a cluster at 3:00 AM at a time there should not be that much traffic will be considered as suspicious.

It should be appreciated by those skilled in the art that any functions, engines, block diagrams, flow diagrams, state transition diagrams, flowchart and / or data structures described herein represent conceptual views of illustrative circuitry embodying the principles of the invention. Similarly, it will be appreciated that any flow charts, flow diagrams, state transition diagrams, pseudo code, and the like represent various processes.

Although a flow chart may describe operations as a sequential process, many of the operations may be performed in parallel, concurrently or simultaneously. Also some operations may be omitted, combined or performed in different order. A process may be terminated when its operations are completed but may also have additional steps not disclosed in the figure or description. A process may correspond to a method, function, procedure, subroutine, subprogram, etc. When a process corresponds to a function, its termination may correspond to a return of the function to the calling function or the main function.

Each described function, engine, block, step described herein can be implemented in hardware, software, firmware, middleware, microcode, or any suitable combination thereof.

When implemented in software, firmware, middleware or microcode, instructions to perform the necessary tasks may be stored in a computer readable medium that may be or not included in a host device or host system. The instructions may be transmitted over the computer-readable medium and be loaded onto the host device or host system. The instructions are configured to cause the host device or host system to perform one or more functions disclosed herein. For example, as mentioned above, according to one or more examples, at least one memory may include or store instructions, the at least one memory and the instructions may be configured to, with at least one processor, cause the host device or host system to perform the one or more functions. Additionally, the processor, memory and instructions, serve as means for providing or causing performance by the host device or host system of one or more functions disclosed herein.

The apparatuses 1000, 2000 of FIG. 6 illustrate exemplary embodiments of above-described apparatuses such as, or comprised in, a computing device, such as the computing device CD of FIG. 1, that may be or may be comprised in a network equipment NE. The apparatuses 1000, 2000 may be electronic devices comprising one or more electronic circuitries. The apparatuses 1000, 2000 may comprise each a communication control circuitry 1010, 2010 such as at least one processor, and at least one memory 1020, 2020 including a computer program code (software) 1022, 2022 wherein the at least one memory and the computer program code (software) 1022, 2022 are configured, with the at least one processor, to cause the apparatus 1000, 2000 to carry out some of the exemplary embodiments described above. In one or more examples, the apparatus 1000 is configured to carry out the exemplary embodiments of FIGS 3 or 4. In other examples, the apparatus 2000 is configured to carry out the exemplary embodiment of FIG. 5.

The memory 1020, 2020 may be implemented using any suitable data storage technology, such as semiconductor-based memory devices, flash memory, magnetic memory devices and systems, optical memory devices and systems, fixed memory and removable memory. The memory may comprise a configuration database for storing configuration data. For example, the configuration database may store a current neighbour cell list, and, in some exemplary embodiments, structures of the frames used in the detected neighbour cells.

The apparatuses 1000, 2000 may further comprise a communication interface 1030, 2030 comprising hardware and/or software for realizing communication connectivity according to one or more communication protocols. According to one or more example, the communication interface 1030, 2030 may provide the apparatus with radio communication capabilities to communicate in a cellular communication system. The communication interface may, for example, provide a radio interface to terminal devices.

As used in this application, the term "circuitry" may refer to one or more or all of the following:

  ○ hardware-only circuit implementations (such as implementations in only analog and/or digital circuitry) and

    ■ i. a combination of analog and/or digital hardware circuit(s) with software/firmware and
    ■ ii. any portions of hardware processor(s) with software (including digital signal processor(s)), software, and memory(ies) that work together to cause the apparatus to perform various functions) and

  ○ b. combinations of hardware circuits and software, such as (as applicable):

    i. a combination of analog and/or digital hardware circuit(s) with software/firmware and
    ii. ii. any portions of hardware processor(s) with software (including digital signal processor(s)), software, and memory(ies) that work together to cause an apparatus, such as a mobile phone, to perform various functions) and

  ° c. hardware circuit(s) and or processor(s), such as a microprocessor(s) or a portion of a microprocessor(s), that requires software (for example firmware) for operation, but the software may not be present when it is not needed for operation.

This definition of circuitry applies to all uses of this term in this patent application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of exemplary embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (e.g., procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

**Claims**

1. A method comprising:

   - obtaining (32) encoded samples (Z) by applying input samples (X) of a data set, said input samples comprising a number of input data features as input to a first machine learning model, or encoder (ENC), of a machine learning system (MLS, AE), said encoded samples (Z) comprising fewer encoded features than the number of input data features,
   - obtaining (33) a plurality of clusters (K) from said encoded samples,
   - determining (34) a clustering loss (CLL), said clustering loss being defined as taking on a lower value the more homogeneous and separated the clusters are,
   - obtaining (35) reconstructed input samples ($\hat{X}$) by applying said encoded samples (Z) to a second machine learning model, or decoder (DEC), of said machine learning system (MLS, AE),
   - determining (36) a reconstruction loss (RL) based on a difference between the input samples and the reconstructed samples,

   while a stopping condition is not reached (38), said stopping condition comprising a total loss (TL) determined based on said clustering loss (CLL) and said reconstruction loss (RL), and being less than a best total loss, tuning (39) internal weights of said encoder and said decoder based on said total loss, and reiterating the previous steps.

2. The method according to the preceding claim, wherein the clustering (33) comprises grouping the encoded samples into regions based on similarity measures and merging connected regions into a same cluster based on a density value.

3. The method according to any one of the preceding claims, wherein determining a clustering loss (34) comprises determining a mean silhouette value (MSV) for the plurality of clusters (K).

4. The method according to any one of the preceding claims, wherein another stopping condition comprises a patience counter (PT) being equal to or higher than a patience threshold ($\delta$), said patience counter being incremented (392) when the total loss is found not to be less than the best loss and reset (391) when the total loss is found to be less than the best loss.

5. The method according to any one of the preceding claims, comprising, once a stopping condition has been reached:

   - retrieving (40) the internal weights of the encoder corresponding to the best total loss and iterating the previous steps of obtaining encoded samples (Z) by applying the input samples (X) of the training data set to said encoder (ENC) using said internal weights and obtaining (33) a plurality of clusters (K) from said encoded samples,
   - applying the input samples of the whole dataset to the machine using said retrieved internal weights, to output encoded samples and clustering said encoded samples into a plurality of final clusters.

6. The method according to the preceding claim, wherein the method comprises evaluating (42) the plurality of final clusters based on determining a performance score.

7. The method according to the preceding claim, wherein the dataset is a training dataset comprising target labels associated with said input samples and wherein the evaluating comprises verifying the plurality of final clusters (K) match the associated target labels.

8. The method according to any one of the preceding claims, wherein the input samples are data packets collected at one or more collection points of a telecommunication network.

9. A method comprising:

- obtaining (52) encoded samples (Z) by applying input samples (X) from a dataset, one of said input samples comprising a number of input data features, a first machine learning model, or encoder (ENC) of a trained machine learning system (MLS; AE), one of said output encoded samples comprising fewer encoded features than the number of input data features,
- obtaining (53) a plurality of clusters (K) from said encoded samples (X),

said machine learning system (MLS, AE) having been trained using a training data set, a total loss obtained from on a reconstruction loss based on a difference between input samples from the training dataset and reconstructed input samples output by a second machine learning model, or decoder (DEC) of the machine learning system, and a clustering loss (CLL) being defined as taking on a lower value the more homogeneous and separated the clusters of the plurality of clusters are, and tuning internal weights of the encoder and the decoder, while a stopping condition comprising the total loss being less than a best total loss, is not reached.

10. An apparatus (100) comprising means for:
obtaining encoded samples (Z) by applying input samples (X) from a data set, said input samples comprising a number of input data features as input to a first machine learning model, or encoder (ENC), of a machine learning system (MLS, AE), said encoded samples (Z) comprising fewer encoded features than the number of input data features,

- obtaining a plurality of clusters (K) from said encoded samples,
- determining a clustering loss (CLL), said clustering loss being defined as taking on a lower value the more homogeneous and separated the clusters are,
- obtaining reconstructed input samples ($\hat{X}$) by applying said encoded samples (Z) to a second machine learning model, or decoder (DEC), of said machine learning system (MLS, AE),
- determining (a reconstruction loss (RL) based on a difference between the input samples and the reconstructed samples, and
- while a stopping condition is not reached, said stopping condition comprising a total loss (TL) determined based on said clustering loss (CLL) and said reconstruction loss (RL), and being less than a best total loss, tuning (39) internal weights of said encoder and said decoder based on said total loss, and reiterating the previous operations.

11. An apparatus (1000) comprising:

- at least one processor;
- at least one memory storing instructions that, when executed by the at least one processor, cause the apparatus to perform the method according to any one of claims 1 to 8.

12. An apparatus (200) comprising means for:

- obtaining encoded samples (Z) by applying input samples (X) from a dataset, one of said input samples comprising a number of input data features, a first machine learning model, or encoder (ENC) of a trained machine learning system (MLS; AE), one of said output encoded samples comprising fewer encoded features than the number of input data features, and
- obtaining a plurality of clusters (K) from said encoded samples (X),

said machine learning system (MLS, AE) having been trained using a training data set, a total loss obtained from on a reconstruction loss based on a difference between input samples from the training dataset and reconstructed input samples output by a second machine learning model, or decoder (DEC) of the machine learning system, and a clustering loss (CLL) being defined as taking on a lower value the more homogeneous and separated the clusters of the plurality of clusters are, and tuning internal weights of the encoder and the decoder, while a stopping condition comprising the total loss being less than a best total loss, is not reached.

**13.** An apparatus (2000) comprising :

- at least one processor;
- at least one memory storing instructions that, when executed by the at least one processor, cause the apparatus to perform the method according to claim 9.

**14.** A network equipment (CD, NE) comprising a machine learning system (MLS; AE), comprising a first machine learning model, or encoder (ENC) configured to provide encoded samples from input data, and a second machine learning model, or decoder (DEC), and a clustering module (CLS) configured to create a plurality of clusters from the encoded samples output by the machine learning system MLS, an apparatus (100, 1000) according to any one of claims 10 and 11 and an apparatus (200, 2000) according to any of claims 12 and 13.

**15.** A computer program comprising instructions for causing a computer to perform a method according to any one of claims 1 to 9.

FIG.1

**FIG. 2**

**FIG. 3**

**FIG. 4**

51 ⌇ OBT. X

52 ⌇ OBT. Z

53 ⌇ OBT. K

54 ⌇ PRV. K → K → MEM

AN ⌇ (person)

55 ⌇ RTRN ?

LBL

n

y

**FIG. 5**

FIG. 6

Europäisches Patentamt
European Patent Office
Office européen des brevets

**EUROPEAN SEARCH REPORT**

Application Number

EP 24 30 5897

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NGUYEN VAN QUAN ET AL: "A Robust PCA Feature Selection To Assist Deep Clustering Autoencoder-Based Network Anomaly Detection", 2021 8TH NAFOSTED CONFERENCE ON INFORMATION AND COMPUTER SCIENCE (NICS), IEEE, 21 December 2021 (2021-12-21), pages 335-341, XP034081895, DOI: 10.1109/NICS54270.2021.9701456 [retrieved on 2022-02-01] * abstract * * Sections II-V * | 1-15 | INV. G06F18/23 G06N3/0455 G06N3/088 H04L9/40 G06F21/55 |
| X | NGUYEN VAN QUAN ET AL: "Clustering-Based Deep Autoencoders for Network Anomaly Detection", 19 November 2020 (2020-11-19), SPRINGER, PAGE(S) 290 - 303, XP047570780, * abstract * * Sections 3-4 * | 1-15 | |
| X | NGUYEN VAN QUAN ET AL: "Deep Nested Clustering Auto-Encoder for Anomaly-Based Network Intrusion Detection", 2023 RIVF INTERNATIONAL CONFERENCE ON COMPUTING AND COMMUNICATION TECHNOLOGIES (RIVF), IEEE, 23 December 2023 (2023-12-23), pages 289-294, XP034575123, DOI: 10.1109/RIVF60135.2023.10471853 [retrieved on 2024-03-22] * abstract * * sections 4-5 * | 1-15 | TECHNICAL FIELDS SEARCHED (IPC) G06F G06N G06V H04L |

-/--

The present search report has been drawn up for all claims

| Place of search | Date of completion of the search | Examiner |
|---|---|---|
| Munich | 4 November 2024 | Maghroum, Walid |

EPO FORM 1503 03.82 (P04C01)

page 1 of 2

Europäisches Patentamt

European Patent Office

Office européen des brevets

# EUROPEAN SEARCH REPORT

**Application Number**

EP 24 30 5897

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MIN ERXUE ET AL: "SU-IDS: A Semi-supervised and Unsupervised Framework for Network Intrusion Detection", 13 September 2018 (2018-09-13), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 322 - 334, XP047485226, ISBN: 978-3-540-74549-5 [retrieved on 2018-09-13] * abstract * * sections IV-V. * ----- | 1-15 | |

TECHNICAL FIELDS SEARCHED (IPC)

The present search report has been drawn up for all claims

| Place of search | Date of completion of the search | Examiner |
|---|---|---|
| Munich | 4 November 2024 | Maghroum, Walid |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MONSHIZADEH et al.** A deep density based and self-determining clustering approach to label unknown traffic. *Journal of Network and Computer Applications*, 2022, vol. 207, 103513
- **KHAN et al.** DBSCAN: Past, present and future. *The Fifth International Conference on the Applications of Digital Information and Web Technologies (ICADIWT)*, 232-238
- An alternative softmax operator for reinforcement learning. **ASADI et al.** Proceedings of the 34th International Conference on Machine Learning, volume 70 of Proceedings of Machine Learning Research. 06 August 2017, vol. 70, 243-252

- **SHARAFALDIN et al.** *Toward generating a new intrusion detection dataset and intrusion traffic characterization*, 2018, 15, 16, 23
- **MOUSTAFA et al.** Unsw-nb15: a comprehensive data set for network intrusion detection systems (unsw-nb15 network data set. *proceedings of Military Communications and Information Systems Conference (MilCIS)*, 2015, 1-6
- **GARCIA et al.** An empirical comparison of botnet detection methods. *computers & security*, 2014, vol. 45, 100-123